# EUROPEAN PATENT SPECIFICATION

(11) **EP 4 243 637 B1**
(45) Date of publication and mention of the grant of the patent: **04.11.2026**
(21) Application number: 21798758.5
(22) Date of filing: 29.09.2021
(51) Int. Cl.: A24D 3/18, A24F 13/02, A24F 13/04, A24F 13/06

(54) **DELIVERY SYSTEM**
VERABREICHUNGSSYSTEM
SYSTÈME D'ADMINISTRATION

(30) Priority: 13.11.2020 GB 202017941
(43) Date of publication of application: 20.09.2023
(73) Proprietor: Nicoventures Trading Limited, London WC2R 3LA (GB)
(72) Inventor: HUGHES, Steven, London WC2R 3LA (GB); FRASER, Rory, London WC2R 3LA (GB)
(74) Representative: Brown, Alexander Edward
(86) International application number: PCT/GB2021/052522
(87) International publication number: WO 2022/101602

(56) References cited:
- WO-A1-2008/099147
- WO-A1-2018/084835
- CN-A- 110 680 022
- KR-U- 20110 006 928
- US-A1- 2014 174 458
- US-A1- 2020 054 076

## Description

### Technical Field

The present invention relates to a cap for use with a delivery system and a delivery system comprising such a cap.

### Background

Some delivery systems are provided with a cap to cover and/or protect a part of the delivery system. The cap is typically removable and in some cases can be reusable. Some delivery systems comprise a mouthpiece for the delivery of a substance to a user's mouth. A cap can be provided to cover the mouthpiece until such a time that the user requires access to the mouthpiece, at which point, the cap is typically removed by the user. WO 2018/084835 A1 discloses a handheld vaporizer comprising a cap to be mounted over the mouthpiece thereof.

### Summary

In accordance with the invention there is provided a delivery system comprising a mouthpiece and a cap, wherein the cap is configured to be attached to the delivery system so as to cover the mouthpiece, the cap comprising an outer wall defining an internal cavity with an entrance opening at a first end of the cap, the internal cavity configured to receive a mouthpiece of the delivery system, wherein the cap outer wall includes at least one aperture disposed at a second end of the cap which is opposite to the first end and arranged to allow airflow through the internal cavity, around the mouthpiece and out of the cap via the at least one aperture when the cap is fitted to a delivery system.

The second end may be entirely closed except for the aperture(s).

The cap may comprise a central longitudinal plane extending through the first end, the internal cavity and the second end and the apertures may be symmetrically arranged about the central longitudinal plane.

The internal cavity may comprise a greater cross sectional area towards the entrance opening than towards the second end.

The outer wall may comprise an end wall at the second end and a sidewall extending from the end wall to the entrance opening, wherein the end wall may comprise the aperture(s).

The cap may further comprise a sealing element within the internal cavity which may be configured to engage with and seal an outlet of a delivery system mouthpiece when the cap is fitted to a delivery system.

The sealing element may comprise a formation extending into the internal cavity which may be configured to be received within an outlet of a delivery system mouthpiece when the cap is fitted to a delivery system.

The sealing element may comprise a formation extending into the internal cavity which may surround or extend across an outlet of a delivery system mouthpiece so as to seal the outlet when the cap is fitted to a delivery system.

The sealing element may be provided on the end wall.

The aperture(s) may be provided with an air permeable filter element through which air may pass when passing through the aperture(s). In some embodiments the aperture(s) may be provided with an air permeable filter element through which air must pass when passing through the aperture(s).

The filter element may be provided within the aperture(s).

The width or diameter of the aperture(s) may be between around 1mm to 3mm.

An airflow passage is defined through the internal cavity between the aperture(s) and the entrance opening.

The cap may further comprise at least one air inlet disposed in the outer wall, wherein an airflow passage may be defined between the air inlet(s) and the aperture(s).

The or each air inlet may be disposed closer to the first end of the cap than the second end. The or each air inlet may be provided in the side wall.

The cap may further comprise at least one inner wall which may be configured so as to be disposed between the outer wall and the mouthpiece when the cap is fitted to a delivery system, wherein the airflow passage may be defined at least by the outer wall and the or at least one of the inner wall(s).

The inner wall(s) may extend between the first and second ends of the cap.

The inner wall(s) may extend inwardly from the outer wall and may define airflow passages as open channel(s) between the inner wall(s).

The inner wall(s) may be configured to define a closed duct within the internal cavity which may be open only at distal ends of the duct proximate the first and second ends of the cap respectively.

The inner wall(s) may extend substantially parallel to at least a portion of the outer wall and spaced therefrom.

The inner wall(s) may extend annularly or part-annularly around at least a portion of the internal cavity.

The cap may further comprise a secondary sealing element within the internal cavity which may be configured to engage with a body of a delivery system when the cap is fitted to a delivery system.

The secondary sealing element may be provided proximate the entrance opening.

The cap may further comprise a receiving portion which may be configured to engage with a delivery system to secure the cap to the delivery system.

The receiving portion may comprise at least one formation extending into the internal cavity, which may be configured to provide a friction fit attachment with a delivery system.

The formation may be substantially elongate, and may extend from a first end of the cap towards a second end of the cap, wherein the second end may be where the delivery system is received.

The cap may comprise four formations, which may be arranged around an internal surface of the receiving portion.

The formations may comprise a resilient material.

The formations may be rigid and/or may be formed of the material of the outer wall.

The sealing element may seal an outlet of the delivery system mouthpiece.

The airflow passage may be defined between the outer wall and the delivery device mouthpiece.

An annular or part-annular space may be defined at the first end of the cap between the cap and the delivery system in fluid communication with the airflow passage and the at least one aperture.

The airflow passage may be fluidly isolated from the outlet of the mouthpiece.

The internal cavity may be entirely closed by the outer wall, except for the entrance opening and the aperture(s).

The aperture(s) may comprise a circular cross-sectional area. The aperture(s) may comprise an elliptical shape. The aperture(s) may comprise a polygonal cross-sectional area. The aperture(s) may comprise an annular shape. The aperture(s) may comprise a linear shape.

The cap may comprise between 2 and 10 apertures.

All the apertures may comprise the same shape and/or size cross sectional area.

The end wall may comprise a smaller cross sectional area than the entrance opening. The end wall may extend substantially perpendicularly to the side wall.

The outer wall may be rigid.

The cap may be removably attachable to both a first end of the delivery system and a second end of the delivery system, wherein the first end may comprise the mouthpiece.

The sealing element may be made of a resilient material. The material may be for example but not limited to rubber, foam, an elastomer or silicone.

### Brief Description of the Drawings

Embodiments of the invention will now be described, by way of example only, with reference to the accompanying drawings, in which:
**Figure** 1 shows a perspective front view of a cap for a delivery system of an embodiment;
**Figure** 2 shows a top view of the cap for a delivery system of Figure 1;
**Figure 3** shows a schematic cross-sectional front view of the cap for a delivery system of Figures 1 and 2 showing a direction of airflow in an airflow passage;
**Figure** 4 shows the cap of Figures 1 to 3 assembled on a first end of a delivery system comprising a mouthpiece;
**Figure** 5 shows the cap of Figures 1 to 4 assembled on a second end of a delivery system comprising a mouthpiece;
**Figure** 6 shows a schematic cross-sectional front view of a cap for a delivery system according to another embodiment comprising an inner wall;
**Figure 7** shows a schematic top view of the cap of Figure 6 comprising an inner wall;
**Figure** 8 shows a schematic cross-sectional front view of a cap for a delivery system according to another embodiment comprising air inlets disposed towards a first end of the cap;
**Figure** 9 shows a schematic top view of the cap of Figure 8 comprising air inlets disposed towards a first end of the cap;
**Figure 10** shows a schematic top view of a cap for a delivery system according to another embodiment comprising isolated passages;
**Figure** 11 shows a schematic top view of a cap for a delivery system according to another embodiment comprising a filter element in the apertures;
Figure 12 shows a schematic front cross-sectional view of a cap for a delivery system according to another embodiment comprising a sealing element for sealing an aperture in a mouthpiece of a delivery system;
Figure 13 shows a schematic top view of the cap of Figure 12 comprising a sealing element for sealing an aperture in a mouthpiece of a delivery system;
**Figure 14a** shows a schematic top view of a cap for a delivery system according to another embodiment comprising annularly shaped apertures;
**Figure 14b** shows a schematic top view of a cap for a delivery system according to another embodiment comprising a plurality of apertures of different shapes and sizes;
**Figure** 14c shows a schematic top view of a cap for a delivery system according to another embodiment comprising a plurality of apertures arranged to form a letter V;
**Figure 14d** shows a schematic top view of a cap for a delivery system according to another embodiment comprising a plurality of apertures configured to form a mesh;

### Detailed Description

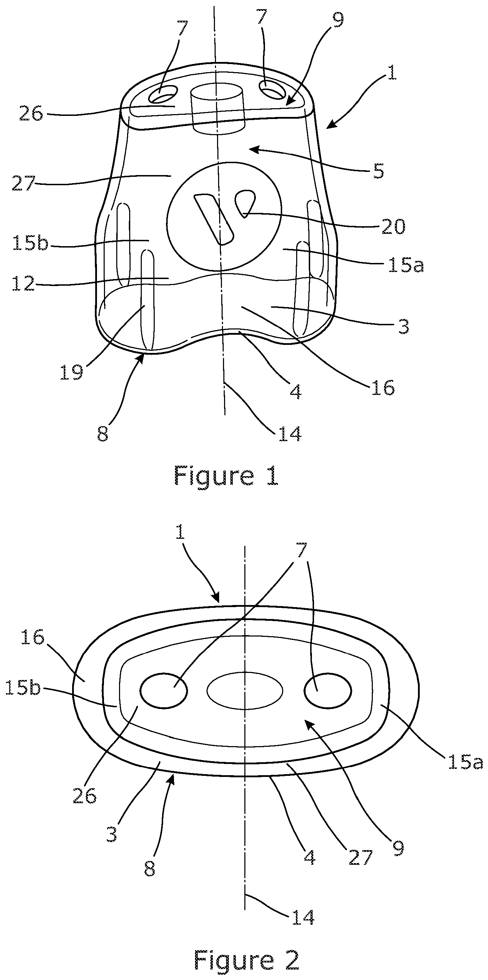

Referring now to Figures 1 to 5, an embodiment of a cap 1 for a delivery system 2 is shown.

In the present embodiment, the delivery system 2 is a non-combustible aerosol provision system 2. However, in alternative embodiments (not shown), the delivery system 2 described herein can be implemented as an arrangement other than a non-combustible aerosol provision system 2. For example, the delivery system 2 may be a combustible aerosol provision system (not shown) or an aerosol-free delivery system (not shown).

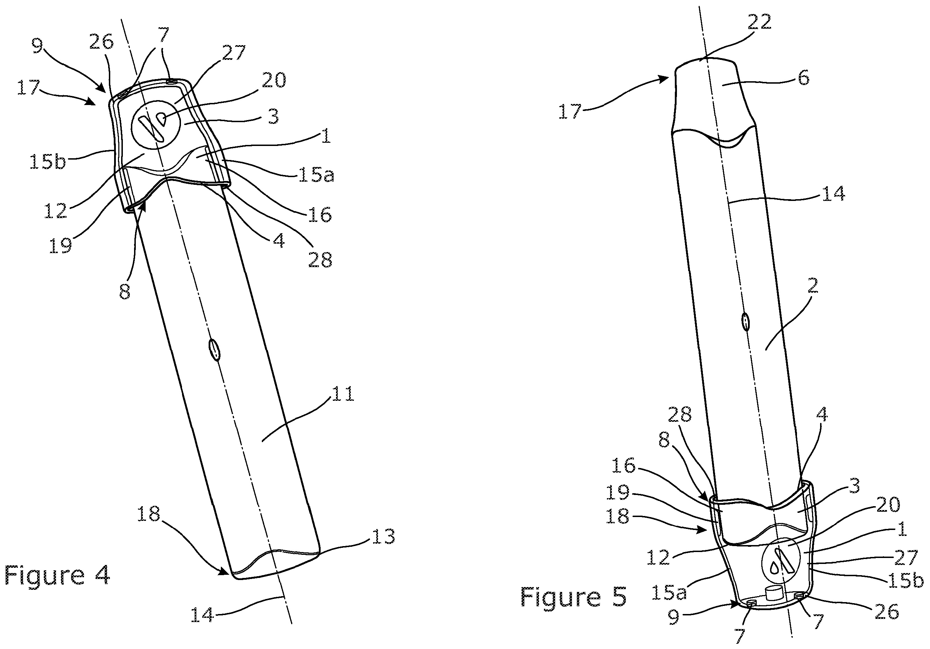

The cap 1 comprises an outer wall 3 defining an entrance opening 4 and an internal cavity 5. The cap 1 is configured to receive a mouthpiece 6 (shown in Figures 4 and 5) of a delivery system 2 within the internal cavity 5 when in use.

The outer wall 3 of the cap 1 includes at least one aperture 7, separate to the entrance opening 4, configured to allow airflow into and out of the internal cavity 5. In the embodiment shown in Figures 1 to 5, the cap 1 comprises two apertures 7.

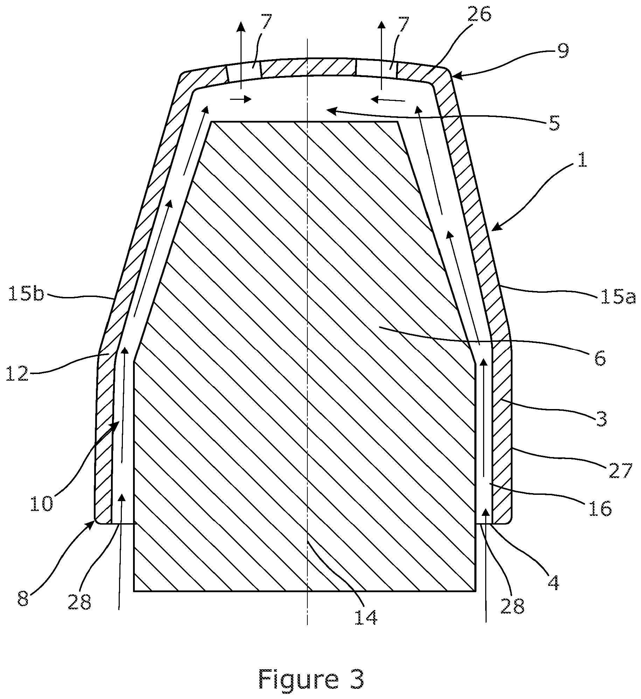

In this exemplary embodiment, the internal cavity 5 is entirely closed by the outer wall 3, except for the entrance opening 4 and the apertures 7. This can assist in defining an airflow passage 10 through the cap 1, if a user draws on the mouthpiece 6 of the delivery system 2 without removing the cap 1. An annular or part-annular space or gap 28 is defined at the first end 8 of the cap 1 between the cap 1 and the delivery system 2. The annular or part annular space 28 is in fluid communication with the airflow passage 10 and the at least one aperture 7. An example of an airflow passage 10 can be seen in Figure 3. When the cap 1 is assembled covering the mouthpiece 6 of the delivery system 2, then the airflow passage 10 (seen in Figure 3) is considered to extend from the entrance opening 4, around the mouthpiece 6 of the delivery system 2, and through the apertures 7. Air is drawn into the annular or part annular space 28, through the airflow passage 10 and through the apertures 7 into a user's mouth. In some embodiments, including any of those described hereinafter below, there may be provided such a feature of an annular or part-annular space or gap 28 defined at the first end 8 of the cap 1 between the cap 1 and the delivery system 2 and which communicates with the airflow passage 10.

In some embodiments the outer wall 3 is shaped to closely fit the mouthpiece 6 of the delivery system 2, such that when the mouthpiece 6 is received in the cap 1, the internal cavity 5 is substantially filled by the mouthpiece 6, except for air passage 10.

The cap 1 comprises a first end 8 proximate the entrance opening 4 and a second end 9 at the opposite end of the cap 1 from the first end 8. In some embodiments the apertures 7 are disposed closer to the second end 9 than the first end 8. As shown in Figures 1 to 5, the apertures 7 are provided at a region of the second end 9 distal-most from the first end 8.

The cap 1 comprises a central plane 14 extending through the first end 8, the internal cavity 5 and the second end 9. The cap 1 comprises two substantially equal portions 15a, 15b, one each side of the central plane 14. The cap 1 has a length along the central longitudinal plane 14 which is greater than the width of the cap 1 measured perpendicular to the central plane 14. The apertures 7 are arranged to be symmetrical about the central plane 14 in their arrangement and/or geometry.

In the embodiment shown in Figures 1 to 5, the apertures 7 are circular in cross-section. The apertures 7 are the same size, and are typically sized to be between 1mm and 5mm in diameter, in particular in the embodiment shown in Figures 1 to 5 the apertures 7 are around 2mm in diameter.

Advantageously providing the apertures 7 at the second end 9 means that if a user attempts to draw on the mouthpiece 6 before removing the cap 1 they will draw air through the air passage 10. This can prevent the cap 1 from accidentally being separated from the delivery system 2 and sticked into a user's mouth. Providing apertures 7 in both portions 15a, 15b of the cap 1 ensures that the air flows through the air passage 10 through both portions 15a, 15b of the cap 1, and may flow substantially equally though both portions 15a, 15b. This may help increase the ability of air to flow though the cap 1 and may further reduce the risk of the cap 1 being removed from the delivery system 2 by suction from a user's mouth. Providing equally sized, shaped and/or spaced apertures 7 provides similar advantages as described above.

The outer wall 3 is made of a rigid material such as a rigid plastic. The outer wall 3 being made of a rigid material advantageously reduces the risk of the outer wall 3 collapsing or being drawn towards a centre of the internal cavity 5 if a user was to draw on the on the mouthpiece 6 before removing the cap 1. The outer wall 3 collapsing or being drawn towards a centre of the internal cavity 5 may block the air passage 10.

The internal cavity 5 comprises a greater cross sectional area towards the entrance opening 4 than towards the second end 9. As shown best in Figures 4 and 5, this greater cross sectional area is configured to receive a portion of the delivery system 2, for example but not limited to the mouthpiece 6, a body 11 of the delivery system 2, or a base 13 of the delivery system 2.

The internal cavity 5 comprising a greater cross-sectional area towards the entrance opening 4 can advantageously provide a stop where the internal cavity 5 narrows, to prevent the cap 1 from being pushed too far onto the delivery system 2. The point at which the internal cavity 5 narrows can be referred to as a shoulder 12. The portion of the delivery system 2 received in the internal cavity 5 abuts the shoulder 12 and cannot be pushed in any further. This may prevent excessive pressure from being applied to the second end 9 of the cap 1 or to the portion of the delivery system 6, 11, 13, received in the cap 1. A further advantage of the cap 1 being prevented from being pushed too far onto the delivery system 2 is that the apertures 7 are not blocked by the portion of the delivery system received in the cap 1.

The portion of the outer wall 3 which surrounds the entrance opening 4 to receive a portion of the delivery system 2 is herein referred to as receiving portion 16.

The receiving portion 16 is configured to provide a close fit against the aforementioned portion of the delivery system 2 such that when the delivery system 2 is received in the cap 1, the cap 1 remains attached to the delivery system 2 until such time that the user removes the cap 1. The cap 1 is removed by a user pulling the cap 1 in an axial direction away from the delivery system 2, overcoming friction existing between the cap 1 and the delivery system 2.

In some embodiments the outer wall 3 comprises an end wall 26 at the second end 9 and a side wall 27 extending from the end wall 26 to the entrance opening 4, wherein the end wall 26 comprises the aperture(s). The end wall 26 comprises a smaller cross sectional area than the entrance opening 4. The end wall 26 extends substantially perpendicular to the side wall 27. In some embodiments the end wall 26 is curved or rounded, alternatively the end wall 26 is flat.

Figure 4 shows the cap 1 assembled with a delivery system 2. The delivery system 2 comprises a mouthpiece 6 at a first end 17 and a base 13 at a second end 19. The delivery system 2 further comprises a body 11 extending between the first end 17 and the second end 18. The mouthpiece 6 comprises an outlet 22, through which delivery of a substance to a user's mouth occurs, when a user draws on the mouthpiece 6.

Figure 5 shows the cap 1 assembled with the second end 18 of the delivery system 2. In some embodiments the cap 1 is configured to be removably attachable to both the first end 17 and the second end 18 of the delivery system 2. In such an embodiment the receiving portion 16 is shaped such that it is suitable for engagement with both ends 17, 18.

In some embodiments the cap 1 further comprises at least one engagement member 19. The engagement member 19 is configured to fit against the aforementioned portion of the delivery system 2 such that a user must overcome friction existing between the engagement member 19 and the delivery system 2 to remove the cap 1.

The engagement member 19 is provided in the receiving portion 16. The engagement members 19 shown in Figures 1 to 5 are elongate formations extending into the internal cavity 5. The engagement member 19 extends from near the entrance opening 4 to near the shoulder 12.

The engagement members 19 are formed of the same material as the outer wall 3. The engagement members 19 shown in Figures 1 to 5 are integrally formed with the outer wall 3. The engagement members 19 are arranged symmetrically about the central plane 14. As seen best in Figure 1 the cap 1 comprises four engagement members 19, two arranged on the first side 15a and two arranged on the second side 15b.

Advantageously providing the engagement members 19 symmetrically about the central plane 14 provides an equal engagement force on both sides 15a, 15b of the cap 1. This facilitates the cap 1 being removed axially away from the delivery system 2 reducing the risk of the cap 1 being stuck on one side of the delivery system 2 and having to urge the cap 1 from one side to another 15a, 15b to remove it.

In some embodiments the cap 1 further comprises a tactile portion 20 on the outer wall 3, the tactile portion 20 being detectable by a user's touch when gripping the cap 1, for example when removing the cap 1. The tactile portion 20 is configured to provide an enhanced gripping surface when compared with gripping the outer wall 3 without a tactile portion 20. The tactile portion 20 also facilitates detection by a user that the cap 1 is on the delivery system 1 without a visual confirmation, informing the user that the cap 1 needs to be removed before attempting to draw on the mouthpiece 6.

The tactile portion 20 may be provided by a dent, grooves, formations, ridges or an alternative material to the material of the outer wall 3. The tactile portion 20 may comprise a logo, image, word or a pattern.

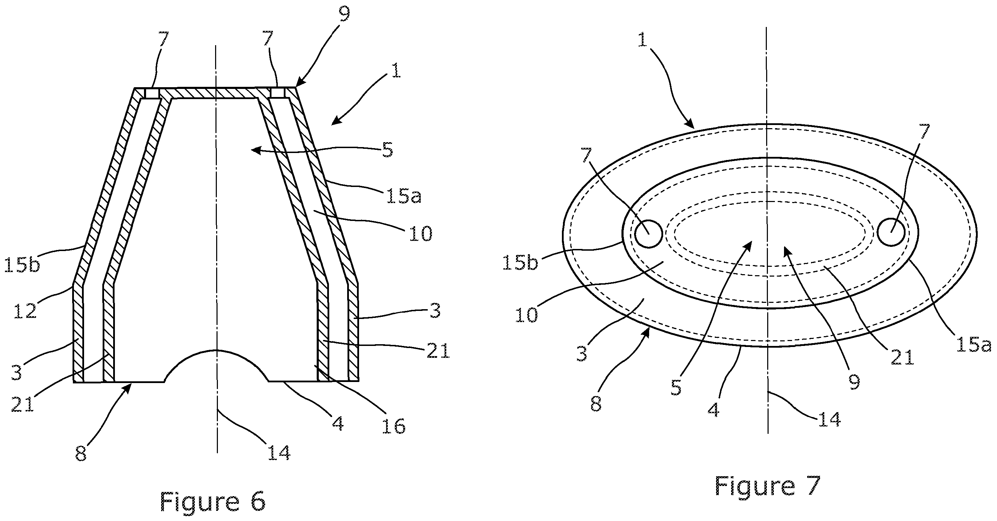

Figures 6 and 7 show a cap 1 of a further embodiment. Figure 6 shows a cross-sectional front view and Figure 7 shows a top view of the cap 1. The cap 1 is substantially as described herein before and like features retain the same reference numerals. A difference of this embodiment is that the cap further comprises an inner wall 21.

The inner wall 21 is provided between the outer wall 3 and a central portion of the internal cavity 5. The inner wall 21 is configured to be disposed between the outer wall 3 and the mouthpiece 6 of the delivery system 2 when assembled on a first end 17 of the delivery system 2. Although shown exaggerated in Figures 6 and 7 for illustration purposes, the airflow passage 10 is defined between the inner wall 21 and the outer wall 3. The apertures 7 are in fluid communication with the airflow passage 10 such that if a user attempts to draw on the mouthpiece 6 before removing the cap 1, air is drawn through an outer annular region of the entrance opening 4, into and through the airflow passage 10 and through the apertures 7 into a user's mouth.

In some embodiments, and as shown in Figure 7, the inner wall 21 extends entirely around the mouthpiece 6 of the delivery system 2 when the mouthpiece 6 is received in the cap 1, such that the airflow passage 10 is fluidly isolated from the mouthpiece 6 and also the outlet 22. This may facilitate to extend the life of the substance within the delivery system 2, as when a user attempts to draw on the mouthpiece 6 before removing the cap 1, air is drawn through the air passage 10 and not from the outlet 22 of the mouthpiece 6. Furthermore, the mouthpiece 6 of the delivery system 2 is protected from debris or contaminants improving the overall hygiene of the mouthpiece 6.

The cap 1 may comprise more than one inner wall, and the or each inner wall may extend entirely or partially around the inner circumference of the outer wall 3. In an alternative arrangement the cap 1 may include a plurality of inner walls extending substantially inwardly from the outer wall, and may extend perpendicularly from the outer wall. Such inner wall(s) may define open channels between themselves which serve as airflow passages within the internal cavity 5 of the cap 1.

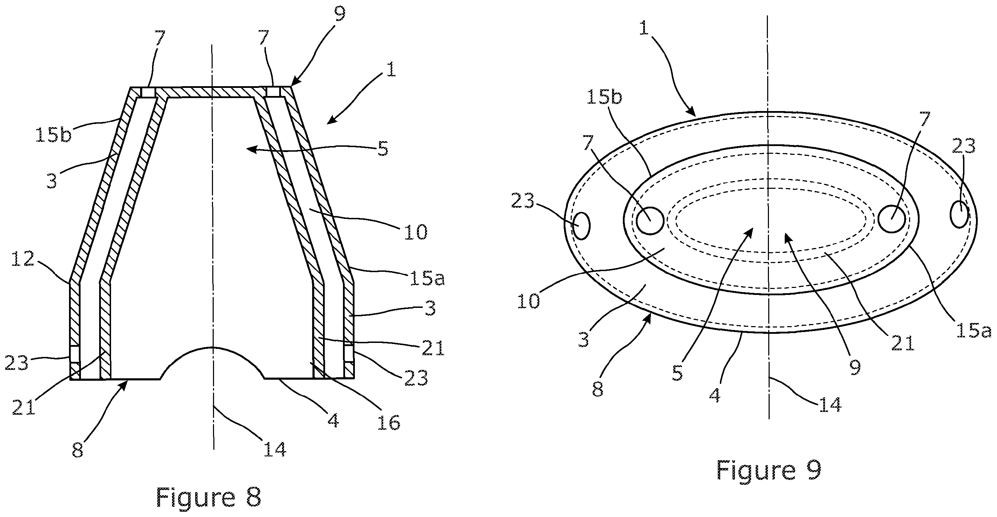

Figures 8 and 9 show a cap 1 of a further embodiment. Figure 8 shows a cross-sectional front view and Figure 9 shows a top view of the cap 1. The cap 1 is substantially as described herein before and like features retain the same reference numerals. A difference of this embodiment is that the cap 1 comprises further apertures disposed towards the first end 8 of the cap 1. These apertures are herein described as air inlets 23.

The air inlets 23 are provided through the outer wall 3. They are disposed further towards the entrance opening 4 than the apertures 7. The air inlets 23 are in fluid communication with the airflow passage 10 such that when a user attempts to draw on the mouthpiece 6 before removing the cap 1, air is drawn through the air inlets 23, into the airflow passage 10, and through the apertures 7 into a user's mouth.

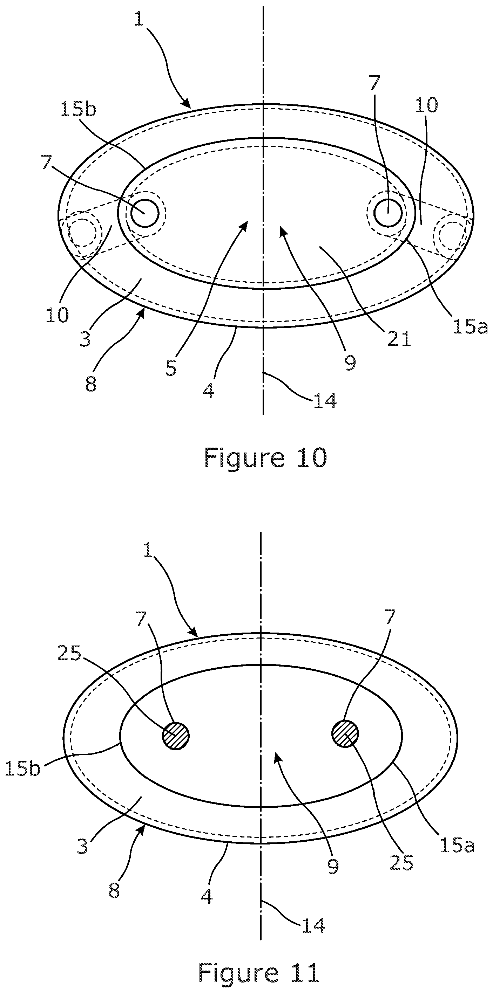

Such air inlets 23 may be provided in any of the embodiments of cap described herein, including the embodiment previously described in reference to Figures 1 to 5, the embodiment described in reference to Figures 6 to 7, and also the embodiments described hereafter in reference to Figures 10 to 14d.

In some embodiments comprising air inlets 23, air may also be drawn through the entrance opening 4 and into the airflow passage 10. However, providing air inlets 23 advantageously facilitates providing an airflow path through the cap 1 from the air inlets 23, though the airflow passage 10 and out of the apertures 7, in an arrangement in which the cap 1 can abut or seal against the delivery system 2 at the entrance opening 4 when the cap 1 is assembled on the delivery system 2. This means that the portion of the internal cavity 5 where the mouthpiece 6 is received can be entirely blocked or sealed from external air.

Advantageously a portion of the delivery system 2 being able to abut against the cap at the entrance opening 4 can facilitate a more streamline configuration of the cap 1 and delivery system 2 which may be more aesthetically or ergonomically appealing to a user.

Figure 10 shows a top view of a cap 1 of a further embodiment. The cap 1 is substantially as described herein before and like features retain the same reference numerals. A difference of this embodiment is that the cap 1 comprises isolated airflow passages 10. A cross-sectional side view of this embodiment would look the same as Figure 6.

The inner walls 21 are configured to provide distinct airflow passages 10 which are fluidly separate from the internal cavity 5 in the cap 1. In the embodiment shown in Figure 10 the cap 1 comprises two airflow passages 10 which are not in fluid communication with each other when the cap 1 is assembled on the delivery system 2. In this embodiment, if a user attempts to draw on the mouthpiece 6 before removing the cap 1, air is only drawn through specific paths defined by the airflow passage 10. Advantageously the airflow passages 10 are also isolated from the mouthpiece 6. Here, the airflow passages 10 comprise closed ducts which are only open at their distal ends at the first and second ends 8, 9 of the cap 1.

As defined therein, the airflow passage 10 or airflow path extending through the internal cavity 5 is intended to cover all arrangements in which the airflow path 10 or passage passes through the space defined within the outer wall of the cap, and so is intended to include arrangements in which the airflow path 10 or passage extends though and is in fluid communication with the internal cavity 5, and also the situation in which the airflow path 10 or passage extends though said space defined within the internal cavity 5 without necessarily being in fluid communication with all of or part of the rest of the internal cavity 5.

The embodiment shown in Figure 10 may also comprise air inlets 23 as described previously, or alternatively air may be drawn through the entrance opening 4 when a user attempts to draw on the mouthpiece 6 before removing the cap 1.

Figure 11 shows a cap of a further embodiment. The cap 1 may be substantially as described in any of the embodiments disclosed herein and like features retain the same reference numerals. A difference of this embodiment is that the apertures 7 comprise an air permeable filter element 25 between the internal cavity 5 and the apertures 7.

Advantageously the filter element 25 is configured to provide an additional barrier to external debris contaminating the mouthpiece 6 whilst still allowing air to be drawn through the apertures 7 if a user attempts to draw on the mouthpiece 6 before removing the cap 1. In some embodiments, like that shown in Figure 11, the filter element 25 is provided within the apertures 7.

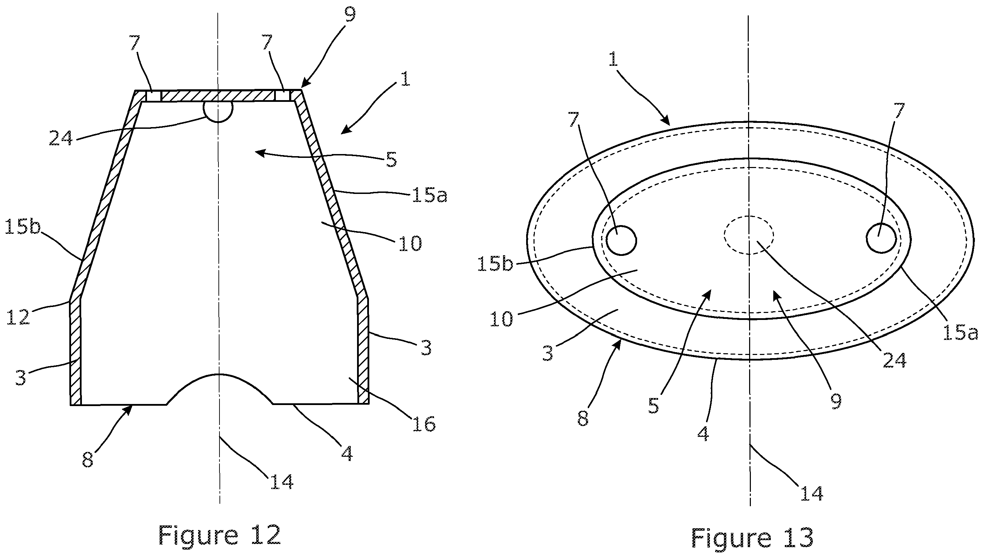

Figures 12 and 13 show a cap 1 of a further embodiment. Figure 12 shows a cross-sectional front view and Figure 13 shows a top view of the cap 1. The cap 1 may be substantially as described in any of the embodiments disclosed herein and like features retain the same reference numerals. A difference of this embodiment is that the cap 1 comprises a sealing element 24.

Sealing element 24 is provided within the internal cavity 5 and is configured to engage with the delivery system 2 to seal the outlet 22 provided in the mouthpiece 6 of the delivery system 2, when the cap 1 is assembled with the first end 17 of the delivery system 2.

The sealing element 24 may comprise a formation extending into the internal cavity 5. This formation is configured to be received within the outlet 22 of the mouthpiece 6 when the cap 1 is assembled with the first end 17 of the delivery system 2. Alternatively the sealing element 24 may be configured to surround the outlet 22 of the mouthpiece 6, or extend across the outlet 22 of the mouthpiece, to seal it when the cap 1 is assembled with the first end 17 of the delivery system 2.

The sealing element 24 may be rigid or alternatively can comprise a resilient material to facilitate improved engagement with the mouthpiece 6.

Advantageously, sealing the outlet 22 of the mouthpiece reduces the risk of debris or contaminants from entering into the outlet 22. Sealing the outlet 22 also prevents any of the substance provided in the delivery system 2 from being drawn from the delivery system 2 until such a time that the cap 1 is removed. Such a sealing element 24 may be provided in any of the embodiments of cap 1 disclosed herein.

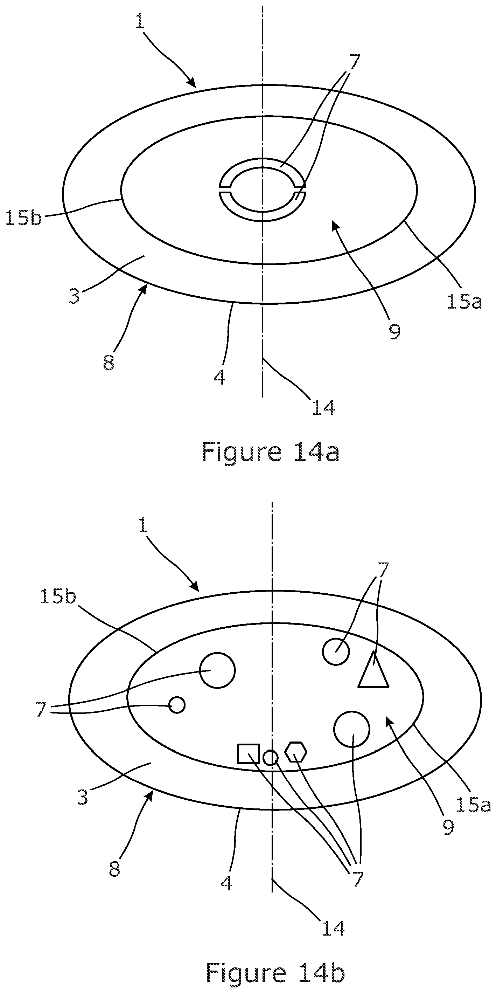

Figures 14a to 14d show a top view of a cap 1 of further embodiments. The cap 1 is substantially as described herein before and like features retain the same reference numerals. A difference of these embodiments are that that the cap 1 comprises alternative configurations of apertures 7.

Figure 14a shows a pair of apertures 7 which are together shaped like an annulus,

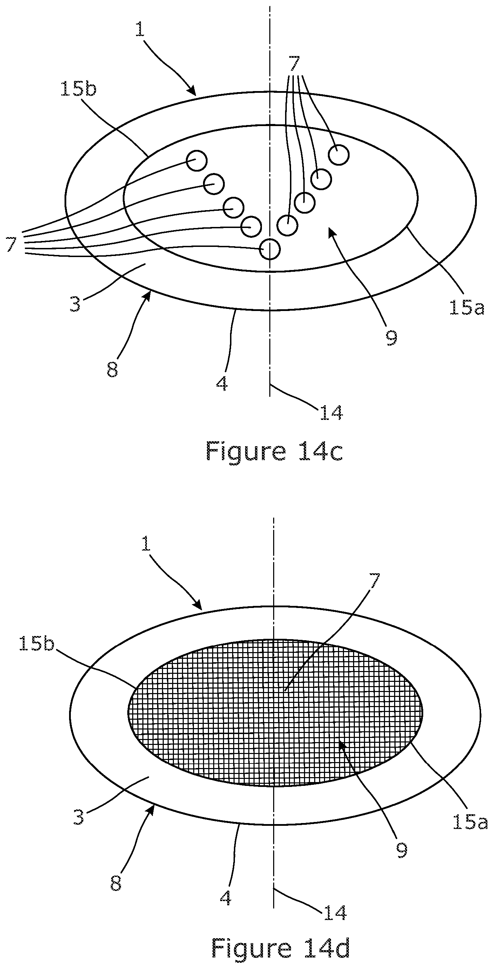

Figure 14b shows a plurality of randomly arranged apertures 7 of different shapes and sizes, Figure 14c shows an arrangement of apertures 7 forming the letter V and Figure 14d shows a plurality of small apertures 7 forming a mesh or grid.

The configuration of apertures 7 shown in Figures 14a to 14d can be combined with the features of any previously disclosed embodiment. For example, the annular aperture 7 in Figure 14a may surround a sealing element 24 as shown in Figures 12 and 13. In some embodiments the apertures 7 may be arranged to form a logo, word, symbol or image.

In any of the above described embodiments the cap 1 may further comprise a secondary sealing element (not shown). The secondary sealing element is configured to engage with a portion of the delivery system 2 to substantially seal the cap 1 against the portion of the delivery system 2 when assembled together.

Various embodiments described above facilitate an improved cap 1 in which, if a user attempts to draw on the mouthpiece 6 before removing the cap, 1 they allow air to be drawn through the air passage 10. This can prevent the cap 1 from accidentally being separated from the delivery system 2 and sucked into a user's mouth.

In the above described embodiments the outer wall 3 comprises a substantially consistent thickness throughout. However in alternative embodiments intended within the present disclosure the outer wall 3 can comprise thicker or thinner portions for reinforcement, ergonomic considerations or weight considerations among other factors.

In the above described embodiments the cap 1 comprises two apertures 7. However, in alternative embodiments intended within the scope of the present disclosure the cap 1 comprises between 2 and 100 apertures 7, in some embodiments between 2 and 50 apertures 7 and in some embodiments between 2 and 10 apertures 7. In some embodiments the cap 1 comprises a mesh or porous material including a plurality of apertures 7 configured to allow airflow into and out of the internal cavity 5. In some embodiments the cap 1 comprises one aperture 7.

In the above described embodiments the apertures 7 are the same size. However, in alternative embodiments intended within the scope of the present disclosure one or more apertures 7 can be differently sized or shaped to another aperture 7 provided in the cap 1.

In the above described embodiments the apertures 7 are typically sized to be between 1mm and 5mm in diameter and in some embodiments 2mm in diameter. However, in alternative embodiments intended within the scope of the present disclosure the cap 1 comprises a mesh or porous material including a plurality of apertures 7 configured to allow airflow into and out of the internal cavity 5. In such an embodiment the apertures 7 may be less than 1mm in diameter. Where the term diameter is used throughout, if the apertures 7 are a non-rounded shape, this can mean width.

In the above described embodiments the apertures 7 are circular in cross-section. However, in alternative embodiments intended within the scope of the present disclosure the apertures 7 can comprise an elliptical shape, a polygonal cross-sectional area, an annular shape and/or a linear shape.

In the above described embodiments the internal cavity 5 is entirely closed by the outer wall 3, except for the entrance opening 4 and the apertures 7. However, in alternative embodiments intended within the scope of the present disclosure the outer wall 3 may comprise further apertures or openings. These further apertures or openings may be for example for ventilation, weight reduction, to improve the airflow through the cap 1 or to receive a further part of the delivery system 2 or another component.

In the above described embodiments the internal cavity 5 comprises a greater cross sectional area towards the entrance opening 4 than towards the second end 9. This is to receive a base of the mouthpiece 6, or to receive a body 11 of the delivery system 2. However, in alternative embodiments intended within the scope of the present disclosure the internal cavity 5 may not comprise a greater cross-sectional area towards the entrance opening 4. In these embodiments the cap 1 may comprise a separate stop in the form of protrusions or formations in the internal cavity 5 to prevent the delivery system 2 from being pushed too far into the cap 1. Alternatively there may be no means of preventing the delivery system 2 from being pushed too far into the cap 1. In such embodiments the mouthpiece 6 and/or base 13 of the delivery system 2 may be shaped in such a manner to prevent the apertures 7 being blocked. In some embodiments the body 11 of the delivery system 2 may comprise a stop to prevent the delivery system 2 from being pushed too far into the cap 1.

In the above described embodiments providing the apertures 7 at the second end 9 means that if a user attempts to draw on the mouthpiece 6 before removing the cap 1 they will draw air through the air passage 10. References to a mouthpiece 6 in this context are also to be considered to refer to any other portion of the delivery system 2 which is received in the cap 1. Alternative portions of the delivery system 2 which may be received in the cap 1 are the body 11 or base 13 of the delivery system 2.

In the above described embodiments the outer wall 3 is made of a rigid material such as a rigid plastic. Many alternative materials can be used as the material of the outer wall 3, for example metal, wood, bamboo or ceramic. In some embodiments the material of the outer wall 3 is biodegradable. Alternatively the outer wall 3 may be made from a non-rigid material. In some embodiments where a non-rigid material is used spacers may be provided within the cap 1 to ensure the air passage 10 is not blocked when a user attempts to draw on the mouthpiece 6 without removing the cap 1. In some embodiments although the material of the outer wall 3 may not be described as rigid, it provides sufficient strength not to collapse when a user attempts to draw on the mouthpiece 6 without first removing the cap 1.

In some embodiments the material of the outer wall 3 is transparent or translucent such that the portion of the delivery system 2 can be seen through the cap 1 even when the cap is assembled with the delivery system 2. However in alternative embodiments intended within the scope of the present disclosure, the material of the outer wall 3 may be opaque, or may comprise visible inclusions or particles in a transparent or translucent base which hinder a user's view through the cap 1.

In the above described embodiments the receiving portion 16 is configured to provide a close fit against the aforementioned portion of the delivery system 2 such that when the delivery system 2 is received in the cap 1, the cap 1 remains attached to the delivery system until such time that the user removes the cap 1. However in alternative embodiments intended within the scope of the present disclosure an alternative part of the cap 1 may be configured to engage with the delivery system 2. For example the shoulder 12 or an inner wall 21 of the cap 1 may be configured to engage with the delivery system 2 such that when the delivery system 2 is received in the cap 1, the cap 1 remains attached to the delivery system until such time that the user removes the cap 1. This engagement could be through a close fit configuration with the delivery system 2 or engagement members 19 described above.

In the above described embodiments the at least one engagement member 19 is formed of the same material as the outer wall 3. However in alternative embodiments intended within the scope of the present disclosure the engagement member(s) 19 may comprise a different material to the outer wall 3, for example the engagement member(s) may comprise a resilient material to provide improved engagement with the delivery system 2.

In the above described embodiments the at least one engagement member 19 is integrally formed with the outer wall 3. However in alternative embodiments intended within the scope of the present disclosure the engagement member(s) 19 may be a separate component which has been bonded or attached to the cap 1 by any known means.

In the above described embodiments the engagement members 19 are arranged symmetrically about the central plane 14. However in alternative embodiments intended within the scope of the present disclosure the engagement members 19 can be arranged in a number of different formations. For example the engagement members 19 may be equally spaced, unequally spaced, there may be an odd number and therefore are not symmetrical about the central plane 14, each engagement member 19 or group of engagement members 19 may be differently shaped or sized.

In the above described embodiments the cap 1 comprises four engagement members 19, two arranged on the first side 15a and two arranged on the second side 15b. However in alternative embodiments intended within the scope of the present disclosure there could be less than four engagement members 19, for example there could be a single engagement member 19 in the form of a continuous ring around the internal cavity 5. In some embodiments there could be more than 4 engagement members 19, for example a series of engagement members 19 in a discontinuous ring around the internal cavity 4 or a plurality of engagement members 19 arranged randomly around the internal cavity 5. It can be appreciated that alternative arrangements of the engagement members 19 than those described herein can be envisaged.

In the above described embodiments the cap 1 comprises at least one engagement member 19. However in alternative embodiments intended within the scope of the present disclosure the cap 1 may not comprise an engagement member 19. In such an embodiment the receiving portion 16 of the cap 1 may directly engage the delivery system 2 to attach the cap 1 to the delivery system 2. Alternatively or additionally, the at least one engagement member 19 may be provided on the delivery system 2.

In the above described embodiments the cap 1 comprises a tactile portion 20. However in alternative embodiments intended within the present disclosure the cap 1 does not comprise a tactile portion 20 and the cap 1 can be sufficiently gripped and removed by a user without the provision of the tactile portion 20.

In the above described embodiments the inner walls 21 are configured to provide two distinct airflow passages. However in alternative embodiments intended within the present disclosure between 1 and 50 distinct passages can be envisaged. The distinct passage(s) may extend from the first end 8 to the second end 9 of the cap 1, they may be angled with respect to the central longitudinal plane 14 of the cap 1, or they may spiral around at least a portion of a circumference of the cap 1, encircling at least a portion of the internal cavity 5. In some embodiments outlets 23 are arranged at intervals along the airflow passage 10 and not only at one end of the airflow passage 10.

It is further envisaged that any combination of the cap features, and particularly airflow passage configurations and apertures, described in the various embodiments above may be provided in any combination in alternative embodiments within the present disclosure.

As used herein, the term "delivery system" is intended to encompass systems that deliver at least one substance to a user, and includes:
combustible aerosol provision systems, such as cigarettes, cigarillos, cigars, and tobacco for pipes or for roll-your-own or for make-your-own cigarettes (whether based on tobacco, tobacco derivatives, expanded tobacco, reconstituted tobacco, tobacco substitutes or other smokable material);
non-combustible aerosol provision systems that release compounds from an aerosol-generating material without combusting the aerosol-generating material, such as electronic cigarettes, tobacco heating products, and hybrid systems to generate aerosol using a combination of aerosol-generating materials; and
aerosol-free delivery systems that deliver the at least one substance to a user orally, nasally, transdermally or in another way without forming an aerosol, including but not limited to, lozenges, gums, patches, articles comprising inhalable powders, and oral products such as oral tobacco which includes sntis or moist snuff, wherein the at least one substance may or may not comprise nicotine.

According to the present disclosure, a "non-combustible" aerosol provision system is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device.

In some embodiments, the non-combustible aerosol provision system, such as a non-combustible aerosol provision device thereof, may comprise a power source and a controller. The power source may, for example, be an electric power source or an exothermic power source. In some embodiments, the exothermic power source comprises a carbon substrate which may be energised so as to distribute power in the form of heat to an aerosol -generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

In some embodiments, the substance to be delivered may be an aerosol-generating material or a material that is not intended to be aerosolised. As appropriate, either material may comprise one or more active constituents, one or more flavours, one or more aerosol-former materials, and/or one or more other functional materials.

The delivery system described herein can be implemented as a combustible aerosol provision system, a non-combustible aerosol provision system or an aerosol-free delivery system.

## Claims

1. A delivery system (2) comprising a mouthpiece (6) and a cap (1), wherein the cap is configured to be attached to the delivery system so as to cover the mouthpiece, the cap comprising an outer wall (3) defining an internal cavity (5) with an entrance opening (4) at a first end (8) of the cap, the internal cavity configured to receive a mouthpiece of the delivery system, wherein the cap outer wall includes at least one aperture (7) disposed at a second end (9) of the cap which is opposite to the first end and arranged to allow airflow through the internal cavity, around the mouthpiece and out of the cap via the at least one aperture when the cap is fitted to the delivery system.

2. A delivery system (2) according to claim 1, further comprising a sealing element (24) within the internal cavity (5) configured to engage with and seal an outlet (22) of the mouthpiece (6) when the cap (1) is fitted to the delivery system.

3. A delivery system (2) according to claim 2, wherein the sealing element (24) comprises a formation extending into the internal cavity (5) configured to be received within an outlet (22) of the mouthpiece (6) when the cap (1) is fitted to the delivery system.

4. A delivery system (2) according to claim 2, wherein the sealing element (24) comprises a formation extending into the internal cavity (5) which surrounds or extends across an outlet (22) of the mouthpiece (6) so as to seal the outlet when the cap is fitted to the delivery system.

5. A delivery system (2) according to any of claims 2 to 4, wherein the outer wall (3) comprises an end wall (26) at the second end (9) and a sidewall extending from the end wall to the entrance opening (4), wherein the end wall comprises the aperture(s) (7), and wherein the sealing element (24) is provided on the end wall.

6. A delivery system (2) according to any of claims 1 to 5, wherein the aperture(s) (7) are provided with an air permeable filter element (25) through which air must pass when passing through the aperture(s), optionally wherein the filter element is provided within the aperture(s).

7. A delivery system (2) according to any of claims 1 to 6, wherein an airflow passage (10) is defined through the internal cavity (5) between the aperture(s) (7) and the entrance opening (4).

8. A delivery system (2) according to any of claims 1 to 7, further comprising at least one air inlet (23) disposed in the outer wall (3), wherein an airflow passage (10) is defined between the air inlet(s) and the aperture(s), optionally wherein the or each air inlet (23) is disposed closer to the first end (8) of the cap (1) than the second end (9), optionally wherein the or each air inlet (23) is provided in the side wall.

9. A delivery system (2) according to claim 7 or claim 8 when dependent on claim 7, further comprising at least one inner wall (21) configured so as to be disposed between the outer wall (3) and the mouthpiece (6) when the cap (1) is fitted to the delivery system, wherein the airflow passage (10) is defined at least by the outer wall (3) and the or at least one of the inner wall(s) (21), optionally wherein the inner wall(s) (21) extend between the first (8) and second ends (9) of the cap (1), optionally wherein the inner wall(s) (21) extend inwardly from the outer wall (3) and define airflow passages as open channel(s) between the inner wall(s) (21), optionally wherein the inner wall(s) (21) are configured to define a closed duct within the internal cavity (5) which are open only at distal ends of the duct proximate the first (8) and second (9) ends of the cap (1) respectively, optionally wherein the inner wall(s) (21) extend substantially parallel to at least a portion of the outer wall (3) and spaced therefrom, optionally wherein the inner wall(s) (21) extend annularly or part-annularly around at least a portion of the internal cavity (5).

10. A delivery system (2) according to any of claims 1 to 9, further comprising a secondary sealing element within the internal cavity (5) configured to engage with a body (11) of the delivery system (2) when the cap (1) is fitted to the delivery system, optionally wherein the secondary sealing element is provided proximate the entrance opening (4).

11. A delivery system (2) according to any of claims 1 to 10, further comprising a receiving portion configured to engage with the delivery system to secure the cap (1) to the delivery system, optionally wherein the receiving portion comprises at least one formation extending into the internal cavity (5), configured to provide a friction fit attachment with the delivery system.

12. A delivery system (2) according to any of claims 2 to 5, wherein the sealing element (24) seals an outlet (22) of the mouthpiece (6).

13. A delivery system (2) according to any preceding claim, when dependent on claim 7, wherein the airflow passage (10) is defined between the outer wall (3) and the mouthpiece (6).

14. A delivery system (2) according to any preceding claim, wherein an annular or part-annular space (28) is defined at the first end (8) of the cap (1) between the cap and the delivery system in fluid communication with the airflow passage (10) and the at least one aperture (7).

15. A delivery system (2) according to any one of claims 8 to 14 when dependent on claim 7, wherein the airflow passage (10) is fluidly isolated from the outlet of the mouthpiece (6).

## Patentansprüche

1. Abgabesystem (2), umfassend ein Mundstück (6) und eine Kappe (1), wobei die Kappe dazu konfiguriert ist, an dem Abgabesystem befestigt zu werden, um das Mundstück abzudecken, wobei die Kappe eine Außenwand (3) umfasst, die einen inneren Hohlraum (5) mit einer Eintrittsöffnung (4) an einem ersten Ende (8) der Kappe definiert, wobei der innere Hohlraum dazu konfiguriert ist, ein Mundstück des Abgabesystems aufzunehmen, wobei die Außenwand der Kappe mindestens einen Durchlass (7) enthält, der an einem zweiten Ende (9) der Kappe angeordnet ist, das dem ersten Ende gegenüberliegt, und ausgelegt ist, um einen Luftstrom durch den inneren Hohlraum, um das Mundstück herum und aus der Kappe heraus über den mindestens einen Durchlass zu ermöglichen, wenn die Kappe an dem Abgabesystem angebracht ist.

2. Abgabesystem (2) nach Anspruch 1, ferner umfassend ein Dichtungselement (24) innerhalb des inneren Hohlraums (5), das dazu konfiguriert ist, mit einem Auslass (22) des Mundstücks (6) in Eingriff zu gelangen und diesen abzudichten, wenn die Kappe (1) an dem Abgabesystem angebracht ist.

3. Abgabesystem (2) nach Anspruch 2, wobei das Dichtungselement (24) eine Struktur umfasst, die sich in den inneren Hohlraum (5) erstreckt und dazu konfiguriert ist, innerhalb eines Auslasses (22) des Mundstücks (6) aufgenommen zu werden, wenn die Kappe (1) an dem Abgabesystem angebracht ist.

4. Abgabesystem (2) nach Anspruch 2, wobei das Dichtungselement (24) eine Struktur umfasst, die sich in den inneren Hohlraum (5) erstreckt und die einen Auslass (22) des Mundstücks (6) umgibt oder sich über diesen erstreckt, um den Auslass abzudichten, wenn die Kappe an dem Abgabesystem angebracht ist.

5. Abgabesystem (2) nach einem der Ansprüche 2 bis 4, wobei die Außenwand (3) eine Endwand (26) an dem zweiten Ende (9) und eine Seitenwand umfasst, die sich von der Endwand zu der Eintrittsöffnung (4) erstreckt, wobei die Endwand den Durchlass/die Durchlässe (7) umfasst und wobei das Dichtungselement (24) an der Endwand bereitgestellt ist.

6. Abgabesystem (2) nach einem der Ansprüche 1 bis 5, wobei der Durchlass/die Durchlässe (7) mit einem luftdurchlässigen Filterelement (25) versehen sind, durch das Luft strömen muss, wenn sie durch den Auslass/die Auslässe strömt, wobei optional das Filterelement innerhalb des Durchlasses/der Durchlässe bereitgestellt ist.

7. Abgabesystem (2) nach einem der Ansprüche 1 bis 6, wobei ein Luftstromdurchgang (10) durch den inneren Hohlraum (5) zwischen dem Durchlass/den Durchlässen (7) und der Eintrittsöffnung (4) definiert ist.

8. Abgabesystem (2) nach einem der Ansprüche 1 bis 7, ferner umfassend mindestens einen Lufteinlass (23), der in der Außenwand (3) angeordnet ist, wobei ein Luftstromdurchgang (10) zwischen dem Lufteinlass/den Lufteinlässen und dem Durchlass/den Durchlässen definiert ist, wobei optional der oder jeder Lufteinlass (23) näher an dem ersten Ende (8) der Kappe (1) als an dem zweiten Ende (9) angeordnet ist, wobei optional der oder jeder Lufteinlass (23) in der Seitenwand bereitgestellt ist.

9. Abgabesystem (2) nach Anspruch 7 oder Anspruch 8, wenn abhängig von Anspruch 7, ferner umfassend mindestens eine Innenwand (21), die so konfiguriert ist, dass sie zwischen der Außenwand (3) und dem Mundstück (6) angeordnet ist, wenn die Kappe (1) an dem Abgabesystem angebracht ist, wobei der Luftstromdurchgang (10) mindestens durch die Außenwand (3) und die Innenwand oder mindestens eine der Innenwände (21) definiert ist, wobei sich die Innenwand/Innenwände (21) optional zwischen dem ersten (8) und dem zweiten Ende (9) der Kappe (1) erstrecken, wobei sich die Innenwand/Innenwände (21) optional von der Außenwand (3) nach innen erstrecken und Luftstromdurchgänge als offene(n) Kanal/Kanäle zwischen der Innenwand/den Innenwänden (21) definieren, wobei die Innenwand/Innenwände (21) optional dazu konfiguriert sind, einen geschlossenen Gang innerhalb des inneren Hohlraums (5) zu definieren, die nur an distalen Enden des Gangs in der Nähe des ersten (8) beziehungsweise des zweiten (9) Endes der Kappe (1) offen sind, wobei sich die Innenwand/Innenwände (21) optional im Wesentlichen parallel zu mindestens einem Abschnitt der Außenwand (3) und davon beabstandet erstrecken, wobei sich die Innenwand/Innenwände (21) optional ringförmig oder teilweise ringförmig um mindestens einen Abschnitt des inneren Hohlraums (5) erstrecken.

10. Abgabesystem (2) nach einem der Ansprüche 1 bis 9, ferner umfassend ein sekundäres Dichtungselement innerhalb des inneren Hohlraums (5), das dazu konfiguriert ist, mit einem Körper (11) des Abgabesystems (2) in Eingriff zu gelangen, wenn die Kappe (1) an dem Abgabesystem angebracht ist, wobei das sekundäre Dichtungselement optional in der Nähe der Eintrittsöffnung (4) bereitgestellt ist.

11. Abgabesystem (2) nach einem der Ansprüche 1 bis 10, ferner umfassend einen Aufnahmeabschnitt, der dazu konfiguriert ist, mit dem Abgabesystem in Eingriff zu gelangen, um die Kappe (1) an dem Abgabesystem zu fixieren, optional wobei der Aufnahmeabschnitt mindestens eine Struktur umfasst, die sich in den inneren Hohlraum (5) erstreckt und dazu konfiguriert ist, eine Reibschlussbefestigung mit dem Abgabesystem bereitzustellen.

12. Abgabesystem (2) nach einem der Ansprüche 2 bis 5, wobei das Dichtungselement (24) einen Auslass (22) des Mundstücks (6) abdichtet.

13. Abgabesystem (2) nach einem vorhergehenden Anspruch, wenn abhängig von Anspruch 7, wobei der Luftstromdurchgang (10) zwischen der Außenwand (3) und dem Mundstück (6) definiert ist.

14. Abgabesystem (2) nach einem vorhergehenden Anspruch, wobei ein ringförmiger oder teilweise ringförmiger Raum (28) an dem ersten Ende (8) der Kappe (1) zwischen der Kappe und dem Abgabesystem in Fluidkommunikation mit dem Luftstromdurchgang (10) und dem mindestens einen Durchlass (7) definiert ist.

15. Abgabesystem (2) nach einem der Ansprüche 8 bis 14, wenn abhängig von Anspruch 7, wobei der Luftstromdurchgang (10) fluidmäßig von dem Auslass des Mundstücks (6) isoliert ist.

## Revendications

1. Système d'administration (2) comprenant un embout buccal (6) et un capuchon (1), dans lequel le capuchon est conçu pour être fixé au système d'administration de manière à recouvrir l'embout buccal, le capuchon comprenant une paroi externe (3) définissant une cavité interne (5) avec une ouverture d'entrée (4) au niveau d'une première extrémité (8) du capuchon, la cavité interne étant conçue pour recevoir un embout buccal du système d'administration, dans lequel la paroi externe du capuchon comprend au moins une ouverture (7) disposée au niveau d'une seconde extrémité (9) du capuchon qui est opposée à la première extrémité et agencée pour permettre un écoulement d'air à travers la cavité interne, autour de l'embout buccal et en dehors du capuchon via l'au moins une ouverture lorsque le capuchon est fixé au système d'administration.

2. Système d'administration (2) selon la revendication 1, comprenant en outre un élément d'étanchéité (24) à l'intérieur de la cavité interne (5) conçu pour venir en prise avec et sceller une sortie (22) de l'embout buccal (6) lorsque le capuchon (1) est ajusté sur le système d'administration.

3. Système d'administration (2) selon la revendication 2, dans lequel l'élément d'étanchéité (24) comprend une formation s'étendant dans la cavité interne (5) conçue pour être reçue à l'intérieur d'une sortie (22) de l'embout buccal (6) lorsque le capuchon (1) est ajusté sur le système d'administration.

4. Système d'administration (2) selon la revendication 2, dans lequel l'élément d'étanchéité (24) comprend une formation s'étendant dans la cavité interne (5) qui entoure ou s'étend à travers une sortie (22) de l'embout buccal (6) de manière à sceller la sortie lorsque le capuchon est ajusté sur le système d'administration.

5. Système d'administration (2) selon l'une quelconque des revendications 2 à 4, dans lequel la paroi externe (3) comprend une paroi d'extrémité (26) au niveau de la seconde extrémité (9) et une paroi latérale s'étendant de la paroi d'extrémité à l'ouverture d'entrée (4), dans lequel la paroi d'extrémité comprend la ou les ouvertures (7), et dans lequel l'élément d'étanchéité (24) est prévu sur la paroi d'extrémité.

6. Système d'administration (2) selon l'une quelconque des revendications 1 à 5, dans lequel la ou les ouvertures (7) sont pourvues d'un élément filtrant perméable à l'air (25) à travers lequel l'air doit passer lorsqu'il passe à travers la ou les ouvertures, éventuellement dans lequel l'élément filtrant est prévu à l'intérieur de la ou des ouvertures.

7. Système d'administration (2) selon l'une quelconque des revendications 1 à 6, dans lequel un passage d'écoulement d'air (10) est défini à travers la cavité interne (5) entre la ou les ouvertures (7) et l'ouverture d'entrée (4).

8. Système d'administration (2) selon l'une quelconque des revendications 1 à 7, comprenant en outre au moins une entrée d'air (23) disposée dans la paroi externe (3), dans lequel un passage d'écoulement d'air (10) est défini entre la ou les entrées d'air et la ou les ouvertures, éventuellement dans lequel la ou chaque entrée d'air (23) est disposée plus près de la première extrémité (8) du capuchon (1) que de la seconde extrémité (9), éventuellement dans lequel la ou chaque entrée d'air (23) est prévue dans la paroi latérale.

9. Système d'administration (2) selon la revendication 7 ou la revendication 8 lorsqu'elle dépend de la revendication 7, comprenant en outre au moins une paroi interne (21) conçue de manière à être disposée entre la paroi externe (3) et l'embout buccal (6) lorsque le capuchon (1) est ajusté sur le système d'administration, dans lequel le passage d'écoulement d'air (10) est défini au moins par la paroi externe (3) et la ou au moins l'une des parois internes (21), éventuellement dans lequel la ou les parois internes (21) s'étendent entre la première (8) et la seconde (9) extrémités du capuchon (1), éventuellement dans lequel la ou les parois internes (21) s'étendent vers l'intérieur à partir de la paroi externe (3) et définissent des passages d'écoulement d'air sous la forme d'un ou plusieurs canaux ouverts entre la ou les parois internes (21), éventuellement dans lequel la ou les parois internes (21) sont configurées pour définir un conduit fermé à l'intérieur de la cavité interne (5) qui sont ouverts uniquement aux extrémités distales du conduit à proximité des première (8) et seconde (9) extrémités du capuchon (1) respectivement, éventuellement dans lequel la ou les parois internes (21) s'étendent sensiblement parallèlement à au moins une partie de la paroi externe (3) et espacées de celle-ci, éventuellement dans lequel la ou les parois internes (21) s'étendent de manière annulaire ou partiellement annulaire autour d'au moins une partie de la cavité interne (5).

10. Système d'administration (2) selon l'une quelconque des revendications 1 à 9, comprenant en outre un élément d'étanchéité secondaire à l'intérieur de la cavité interne (5) conçu pour venir en prise avec un corps (11) du système d'administration (2) lorsque le capuchon (1) est ajusté sur le système d'administration, éventuellement dans lequel l'élément d'étanchéité secondaire est prévu à proximité de l'ouverture d'entrée (4).

11. Système d'administration (2) selon l'une quelconque des revendications 1 à 10, comprenant en outre une partie réceptrice conçue pour venir en prise avec le système d'administration afin de fixer le capuchon (1) au système d'administration, éventuellement dans lequel la partie réceptrice comprend au moins une formation s'étendant dans la cavité interne (5), conçue pour assurer une fixation par ajustement par friction avec le système d'administration.

12. Système d'administration (2) selon l'une quelconque des revendications 2 à 5, dans lequel l'élément d'étanchéité (24) scelle une sortie (22) de l'embout buccal (6).

13. Système d'administration (2) selon l'une quelconque des revendications précédentes, lorsqu'elle dépend de la revendication 7, dans lequel le passage d'écoulement d'air (10) est défini entre la paroi externe (3) et l'embout buccal (6).

14. Système d'administration (2) selon l'une quelconque des revendications précédentes, dans lequel un espace annulaire ou partiellement annulaire (28) est défini au niveau de la première extrémité (8) du capuchon (1) entre le capuchon et le système d'administration en communication fluidique avec le passage d'écoulement d'air (10) et l'au moins une ouverture (7).

15. Système d'administration (2) selon l'une quelconque des revendications 8 à 14 lorsqu'elle dépend de la revendication 7, dans lequel le passage d'écoulement d'air (10) est isolé fluidiquement de la sortie de l'embout buccal (6).
